(19) Europäisches Patentamt
European Patent Office
Office européen des brevets

(11) **EP 3 179 319 B1**

## (12) EUROPEAN PATENT SPECIFICATION

(45) Date of publication and mention
of the grant of the patent:
**11.07.2018  Bulletin 2018/28**

(51) Int Cl.:
*G05B 19/042* (2006.01)    *A01G 25/16* (2006.01)

(21) Application number: **15199210.4**

(22) Date of filing: **10.12.2015**

(54) **METHOD FOR IRRIGATION PLANNING AND SYSTEM FOR ITS IMPLEMENTATION**

VERFAHREN ZUR SPÜLUNGSPLANUNG UND SYSTEM ZU DESSEN IMPLEMENTIERUNG

PROCÉDÉ DE PLANIFICATION D'IRRIGATION ET SYSTÈME POUR SA MISE EN OEUVRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2017  Bulletin 2017/24**

(73) Proprietor: **Sysman Progetti & Servizi S.r.l.
00143 Roma (IT)**

(72) Inventor: **RIEZZO, Erminio Efisio
00143 ROMA (IT)**

(74) Representative: **Conversano, Gabriele
Laforgia, Bruni & Partners srl
Via Michele Garruba, 3
70122 Bari (IT)**

(56) References cited:
**US-A1- 2003 179 102    US-B1- 8 924 031**

## Description

Field of the invention

The present invention relates to a method for irrigation planning and to a system comprising a series of sensors and actuators, configured to carry out said method.

In particular, throughout the present document for "irrigation planning" or also "irrigation strategy" it is intended the decision at time "t" of the quantities of water to be provided to a determined crop at time t+1, t+2... t+n. The present invention provides a decisional logic to optimize irrigation planning, a computer program configured to carry out said logic and an integrated system comprising a program and control software infrastructure and a plurality of sensors and actuators configured to provide information needed to carry out the method and to implement the resulting strategy.

State of the art

At the state of the art there are known various methods to fix the water quantity to be provided to a determined crop, which, according to the cases, are based on a measurement of soil water content, or on a calculation of a water balance of the soil. Both the kinds of method have limits since the methods based on direct measurements of water content need a great number of sensors to consider the heterogeneity of the soil features and the difficulty to determine a measuring point, which can be considered significant for the whole crop. In addition they do not consider dynamic phenomena, as for example the evaporative demand of water (i.e. the water lost by the plant in form of water vapour). On the contrary, methods based on the application of a water balance of the soil do not provide indications on the real water content of the same, and in the embodiments known at the state of the art, do not consider future phenomena as for example weather forecasts or the boundary conditions specific for the crop under examination, such for example the availability of water and the need to share the irrigation system with adjacent crops. On the other hand, at the state of the art there are not known previsional models which consider short/middle term weather forecasts to determine the irrigation strategies. The existing models are studied to solve the problem of the availability of water during the whole growing season and, so, they are studied for supporting decisions by planning the entire cycle of irrigation on seasonal and not daily time scale. At the state of the art it is not known also a system which integrates a software and hardware infrastructure configured to acquire all the information needed to determine the best strategy of irrigation and to implement it.

Two examples of methods known to the art are disclosed in documents US2003/0179102 and US8924031.

Aim of the present invention is to provide a method for irrigation planning which allows to overcome the limits linked to the methods known at the state of the art.

In particular the object of the present invention provides a method for irrigation planning which allows to consider explicitly, while defining the irrigation strategy, both the initial conditions of the soil and the crop (soil water content and developing stage of the crop) and the boundary conditions (soil type, crop type, availability of water resource) and which considers also the future short-term conditions (weather conditions foreseen for the next days).

According to another aim the present invention provides a method for irrigation planning which allows to optimize the water consumption and the product quantity and quality obtained by considering the developing stage of the crop and by managing actively, where needed, the stress due to water scarcity the crop is subjected to.

According to another aim, the present invention provides a method which allows to determine the best irrigation strategy possible for a plurality of crops provided on a plurality of agricultural plots and depending on one or more irrigation sources, also in cases in which the availability of water resource is not sufficient to guarantee the optimal development of all the crops, thus allowing to plan the irrigation of the various plots according to irrigation needs, crop sensibility to the water stress and short-term weather forecasts.

Finally the present invention provides a system comprising a computer program configured to carry out the method of irrigation planning and to output an irrigation strategy to be adopted and a hardware architecture comprising: a plurality of sensors able to detect physical parameters useful for processing the irrigation strategy, a plurality of actuators configured so that the irrigation system is managed, a first electronic device able to carry out the computer program and a plurality of remote devices configured to acquire data relative to said irrigation strategy from said first device and to allow users to visualize effectively and to set remotely the actuators of the system.

Summery of the invention

The invention provides a method for determining the optimal quantity of water to be provided to a plot under cultivation characterized in that it comprises the following steps:

a) acquiring information about the soil water content at the current time ($D_{i-1}$);

b) acquiring information about the soil features (TAW, RAW);

c) acquiring information about the kind of crop present, and in particular its developing stage (Kc) and the level of water stress which the same is able to undergo according to the developing stage (MAD);

d) acquiring information about the weather conditions foreseen in said time interval;

e) calculating, according to the information acquired in steps a) and b), a parameter indicating the level of water stress in the soil at the current time ($Ks_{i-1}$);

f) calculating, according to said parameter calculated at point e) and to said information acquired at points c) and d), a parameter indicating the water quantity lost by the soil due to evaporation and transpiration (ETci);

g) calculating, according to said parameter calculated at point f), a parameter indicating the water stress in the soil at the time following the current one ($Ks_i$), in the hypothesis of no irrigation;

h) determining the water quantity to be provided at the current time (IRRi) in order that the value of said parameter calculated at point g) takes a value such that the water stress is lower than the water stress level that the crop is able to undergo (MAD).

A preferred embodiment of implementation of the method and a complete explanation of the parameters and decisional logics will be now described in detail.

Description of the figures

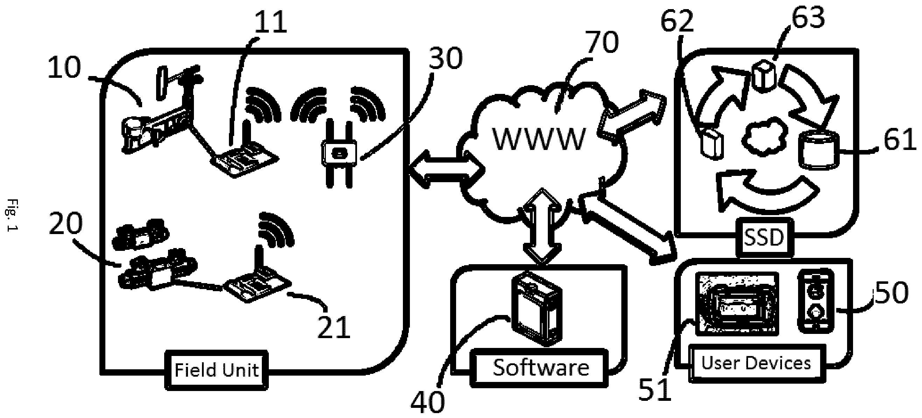

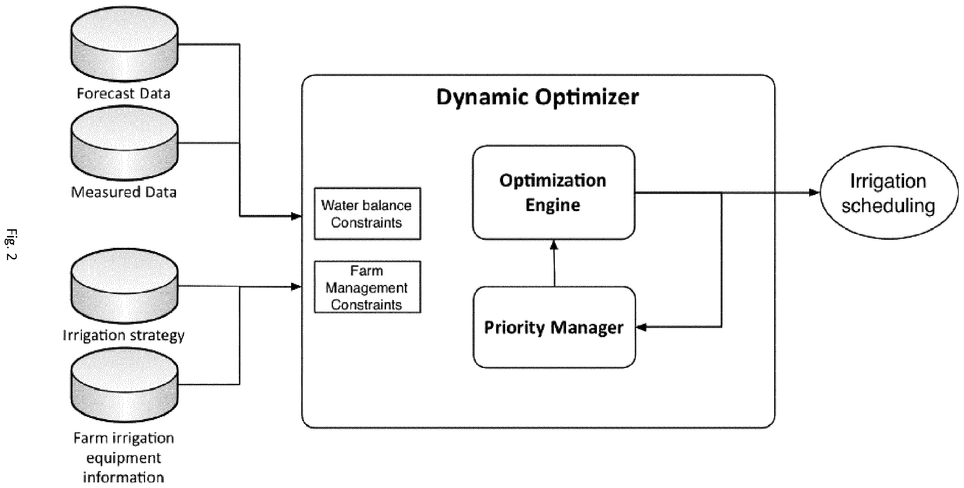

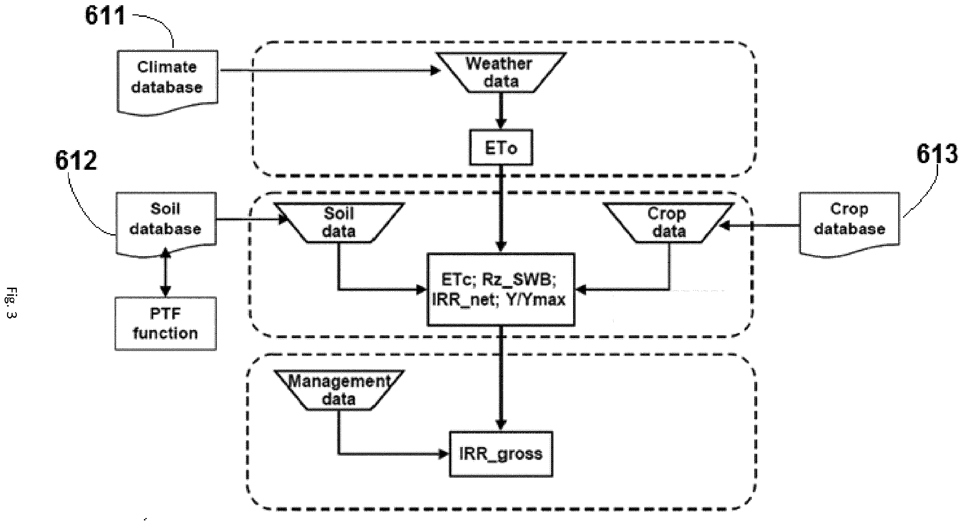

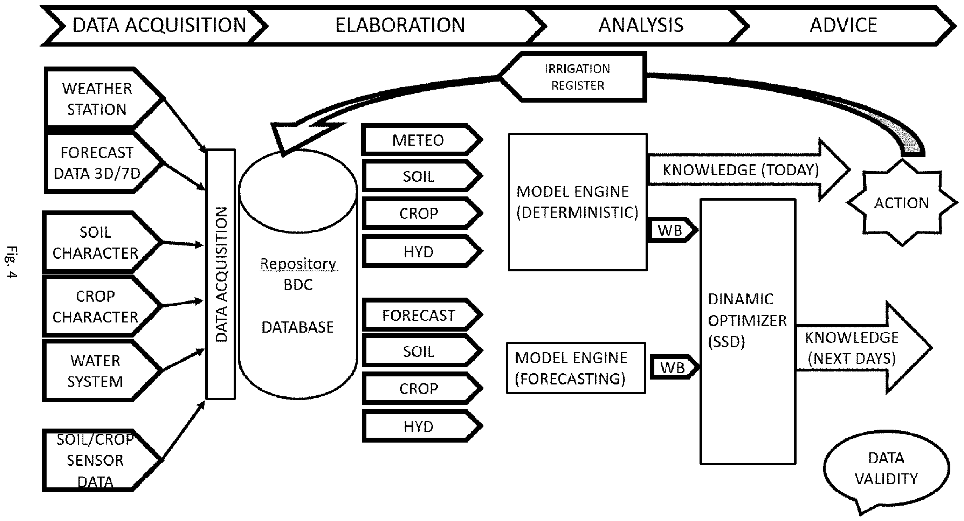

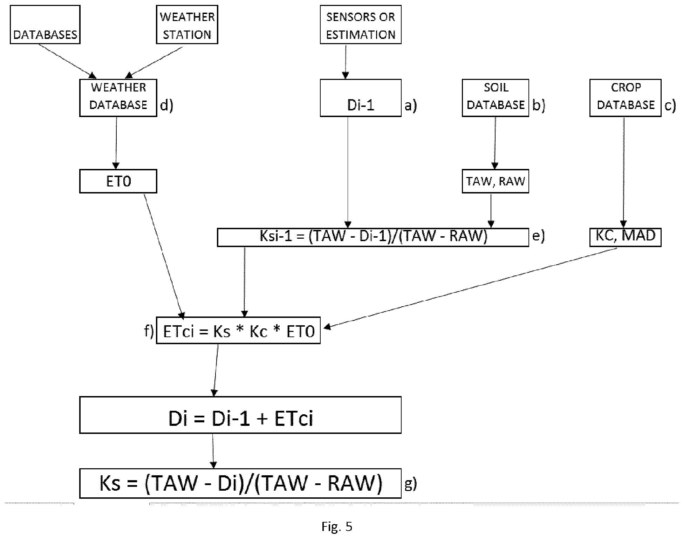

In figure 1 it is shown a concept scheme of the system according to the present invention; in figure 2 it is schematized the functioning logic of the method; in figure 3 it is shown a flow chart of the calculation model adopted for defining the irrigation quantity needed; in figure 4 it is shown the logic flow of use of the method according to the present invention; in figure 5 it is shown a block diagram in which there are explained the relations used for calculating the optimal irrigation strategy.

Detailed description of the invention

With reference to the appended figure 1, the system according to the present invention comprises a plurality of sensors (10), each one provided with a remote transmission unit (11), positioned in the field and configured to detect chemical and physical parameters of interest in order to plan the irrigation. The sensors (10) of the system can comprise both sensors to detect weather quantities (one or more among the following ones: temperature, relative humidity, atmospheric pressure, solar radiation, wind direction and speed, quantity of accumulated rain) and sensors to detect quantities relating to the soil characterization (one or more among the following ones: apparent dielectric permittivity, water volume content, temperature, electric conductivity).

The actuators (20), each one provided with a remote transmission unit (21) as well, allow instead to control remotely the active components of the irrigation system (pumps and/or valves).

The system comprises also a software configured to exchange data with a plurality of database (61) and in which a model is implemented for determining the water content in the soil (62) and a decision support system (SSD, 63).

In its preferred embodiment the system needs three databases: a weather database (611), containing historical series of weather data coming form outer sources or detected by a suitable weather station. The weather quantities can be real (relating to the past and measured by weather stations of the field for the current time) or estimated (i.e. deriving from forecasts on short-term daily basis). The weather database (611) can be supplied both with data detected by weather sensors available in field and data acquired by outer data sources. A database relative to soil characterization (612) containing the hydrological properties required for modeling the various soil types. The database contains information referred to one or more of the following parameters describing the soil: soil texture, SWC (Soil Water Content), WP (Wilting Point), FC (Field Capacity), SAT (saturation), TAW (Total Availability Water), RAW (Ready Available Water), depth and stratification of soil, skeletal percentage. A second database (613) relates to the characteristics of the crops, and contains the standard parameters which characterize a great number of different crops. It is to be précised that the system can be used for both full field tree crops and herbaceous crops. The parameters characterizing a crop comprise the depth of the roots $R_d$ according to the developing stage of the plant, the biometric coefficient $K_c$, associated to the developing stage of the plant as well, the yield reduction coefficient $K_y$ according to the water stress, the water stress thresholds allowed (MAD). In particular, the water stress thresholds allowed are defined in the database by means of the phenologic coefficient, whose utility is explained in the following. The calculation engine (62) is configured to acquire information from the just described databases and to calculate the water balance of the soil. When the water balance is referred to future times it is, really, a previsional water balance and can be used to evaluate the irrigation strategies. In primis on the basis of the data contained in the weather database, and in particular of the intensity of solar radiation, temperature, relative humidity and wind speed, the reference level ($ET_0$) can be calculated for the water quantity lost due to evapo-transpiration. In the following the water balance of the soil is calculated, preferably on daily basis, according to the following equation:

$$D_i = D_{i-1} - P_{i-1} - IRR_{i-1} - Cr_{i-1} + ETc_{i-1} + RO_{i-1} + Dp_{i-1} \quad (1)$$

Where:

$D_i$ is the SOIL WATER DEPLETION, i.e. the quantity of water for soil volume which would be needed, at the i-th time interval, to have saturation conditions; $P_i$ is the quantity of rain fallen on the i-th day (or foreseen for the i-th day if the balance is of previsional type);
$IRR_i$ is the quantity of irrigation water needed (introduced as input or calculated by the model);
$Cr_i$ is the water rise from the subsoil for capillarity;
$ETc_i$ is the water quantity lost for evapo-transpiration:

$RO_i$ is the water lost for the surface runoff;
$DP_i$ is the water excess in the area of the roots, caused by an excess of precipitations or irrigation, which causes deep percolation and therefore loss of water.

Obviously one or more of these parameters can be null or not significant in some contests, as for example the quantity of water rising for capillarity or the water lost for surface runoff.

The water really lost for evapo-transpiration can be calculated according to the growing stage of the crop (by means of the Kc coefficient) and to the water stress coefficient Ks, according to the following relations:

$$ET_c = K_s \ast K_c \ast ET_0 \quad (2)$$

Therefore it is understood how the balance implemented considers explicitly the life stage of the crop and the stage of water stress.

The crop coefficient Kc can be found in literature according to the life stage of the plant, and conveniently the database relative to the crops contains the Ks values needed for the calculation. The water stress coefficient Ks can be instead calculated as follows, according to the SOIL WATER DEPLETION;

$$Ks = (TAW - D) / (TAW - RAW) \quad (3)$$

Where TAW is the water quantity available as a whole in the roots area, RAW is the quantity of water immediately available for the roots and D is the SOIL WATER DEPLETION, yet defined. The D value is null when the soil is water saturated. In absence of rain and irrigation ($P_{i-1} = 0$, Irri-i = 0) for effect of evapo-transpiration ($ETC_{i-1}$) the water content in the soil diminishes, and as a consequence D increases ($D_i > D_{i-1}$). Therefore, D indicates, as said, the water quantity lacking in the soil with respect to the saturation. Therefore, the D value is a function of the soil quality and of the evapo-transpiration phenomena.

When the D value goes under a threshold called RAW (easily available water) it means that in the soil part explored by the roots there is no more water, and the water stress coefficient ($K_s$) takes values lower than the unit. The threshold value RAW depends on the soil characteristic. When D is equal to RAW (and so Ks = 1) it is the time to irrigate, however the effective decision concerning irrigation depends also on a series of other factors, as described in the following.

Practically, on the basis of data contained in the weather database (611), in the soil database (612) and the crop database (613) it is possible to calculate all the values in equation (1) but the water balance on the previous day ($D_{i-1}$) which is however an input of the problem. In fact, it is either a known value deriving from a measure by means of sensors arranged in the field, in case the time i-1 is past yet, or it is in turn the result of a previsional balance.

It is to be observed that when Di is determined, it is possible to calculate also $Ks_i$ (coefficient of water stress) for the corresponding time interval, as it is shown in figure 5. Only for graphical simplicity, figure 5 considers null the terms linked to rain, irrigation, water loss for percolation and rise for capillarity, runoff. But this has not to be intended as limiting with respect to what stated in the previous sections.

Therefore the irrigation strategy (which is defined by values of IRRi for all the times of interest) can be determined according to the tolerable water stress coefficient (MAD, see next), or according to the content of water in the desired soil $D_i$. As an alternative, if the irrigation strategy is known (for example because constrained by outer factors, as for example limited availability of water), by means of the just explained relations the time evolution of the soil water balance

($D_i$) and of the water stress coefficient can be calculated, and so, the effects on the agricultural production can be estimated.

As anticipated, the result provided by the calculation engine (62) which implements the just described relations is used in a decision support system (63) thanks to which there can be calculated the optimal irrigation strategies according to the constraints of water availability and the user preferences.

In particular, with respect to other irrigation logics yet known at the state of the art, DSS according to the present invention allows to calibrate the water quantities to be provided by considering explicitly the water stress sensibility of the specific crop in the specific growing stage. In fact the MAD value (MAD, Management Allowable Depletion) can be set by the user or can be read, according to the crop type and the growing stage, by the database relating to the crops.

Setting Ks >= MAD MAD in (3) means to fix a limit to the water stress level allowed for the crop. In this way, the maximum value of D is obtained which allows to maintain the water stress level above the MAD value:

$$\mathrm{D_{max}} \; = \; (1 \; - \; \mathrm{MAD}) * \mathrm{TAW} \; + \; \mathrm{MAD} * \mathrm{RAW}$$

Having defined Dmax, by means of (1) it is now possible to calculate the minimum value of IRRi, i.e. the minimum quantity of water to be provided by means of irrigation according to the set MAD value.

Therefore, the optimization of the irrigation strategy, as shown in figure 2, considers the use of previsional and measured weather data, the information about irrigation devices present in the field, the preferences of the irrigation strategy, the constraints of water availability and management, and determines the optimal irrigation strategy, which is then output in form of irrigation times programming.

This occurs by applying the just described water balance model to a short-term scenery (preferably between 3 and 7 days). The model allows to associate the daily variation of soil water content to a determined irrigation strategy and so to calculate the final water content in the soil, and, above all, the water stress level.

By using optimization techniques known at the state of the art, based on the just described method, it is possible to optimize the irrigation strategy determining the irrigation times which allow to reduce at minimum the water consumption or to maximize the crop yield, thus satisfying all the constraints set by the conditions of the problem:

Availability of water resource and maximum quantity of water which can be supplied, water stress allowed.

In particular, the model described is usefully applicable to a plurality of plots under cultivation with a plurality of crops, which share the availability of the water resource.

It is the case of soil plots served by a unique well, or however for which the water flow rate available is not sufficient to guarantee the contemporaneous irrigation.

In this case it is needed to determine a plurality of irrigation strategies, one for each plot, with the further constraint that on any day the sum of the water quantity supplied to all the plots is lower or equal to the quantity available.

By having formulated the balance model according to what fully described, it is possible to calculate the irrigation strategies by considering explicitly, in addition to the weather conditions which are reasonably equal for plots of soil positioned on a small territory, also:

- the values of water stress allowed for the various plots, which will be almost surely different since depending not only on the crop type but also on the developing stage of the same;
- the quantities of water lost by the soil for the single plots, which will be different as well since they depend on Kc;

The just described calculation model and decision support system are conveniently managed in a software infrastructure in which it is present an application, preferably web-based (70), provided with a suitable software (40) which allows to put in communication all the components of the system described (sensors, calculation model, actuators). Therefore, by means of the actuators (20) provided in the field it is possible to implement the results of the optimization strategy obtained by means of the decision support system (63), and it is also possible to visualize on a plurality of remote devices (50, 51) all the information concerning the irrigation process (data extracted by databases, sensor measures, results of the optimization module, state of the actuators of the system).

**Claims**

1. Method for determining the optimal quantity of water to be provided to a plot under cultivation, comprising the following steps:

    b) acquiring information about soil features (TAW, RAW), said information about soil features comprising information about the water quantity available as a whole in the roots area (TAW) and information about the quantity of water immediately available for the roots (RAW);

c) acquiring information about the kind of crop, including its developing stage (Kc) and the level of water stress which the same is able to undergo according to the developing stage (MAD);

d) acquiring information about weather conditions foreseen including the quantity of rain foreseen ($P_{i-1}$);

e) calculating a parameter indicating the level of water stress in the soil at the current time ($Ks_{i-1}$);

f) calculating, according to said parameter ($Ks_{i-1}$) calculated at point e) and to said information about crop developing stage (Kc) acquired at points c) and d), a parameter indicating the water quantity lost by the soil due to evaporation and transpiration (ETci);

**characterized in that**

the method further comprises, before step b) the following step:

a) acquiring information about the soil water content at the current time ($D_{i-1}$);

**in that**

said parameter indicating the level of water stress in the soil at the current time ($Ks_{i-1}$) is calculated according to said information about the soil water content at the current time ($D_{i-1}$) and according to said information about soil features (TAW, RAW).

and **in that** the method further comprises the following steps:

g) calculating, according to said parameter (ETci) calculated at point f), a parameter indicating the water stress in the soil at a time step following the current one ($Ks_i$), in the hypothesis of no irrigation;

g1) calculating a water balance of the soil, where soil water depletion at the time step following the current one ($D_i$) is calculated as a function of said soil water content at the current time ($D_{i-1}$), of said quantity of rain foreseen ($P_{i-1}$), of the water quantity to be provided at the current time ($IRR_{i-1}$) and of said water quantity lost by the soil due to evaporation and transpiration (ETci)

h) determining, by means of said water balance of the soil calculated at point g1), the water quantity to be provided at the current time ($IRR_{i-1}$) so that the value of said soil water depletion ($D_i$) has a value such that said parameter ($Ks_i$) calculated at point g) is higher or equal to said level of water stress which the crop is able to undergo according to its developing stage (MAD)

2. Method according to claim 1, **characterized in that** said information about the weather conditions foreseen in said time interval comprise information about one or more among the following variables: temperature, solar radiation, wind speed.

3. Method for determining an irrigation strategy for a plurality of crops provided on a plurality of agricultural plots depending on at least a shared irrigation source, said irrigation source being able to supply in each time interval a water quantity lower or equal to a fixed maximum, comprising the following steps:

k) determining, by means of the method according to claims 1 or 2, the quantity of water to be provided at the current time (IRRi) to each one of said crops

1) checking that the sum of the quantities of water determined for all the plots is lower than said maximum fixed and, if not, reducing the quantity of water supplied to the crop able to undergo the greatest water stress, up to satisfying the constraint linked to the availability of water.

4. System for automatically managing irrigation, comprising:

- at least a sensor (10) provided with a remote transmission unit (11), positioned in the field and configured to detect at least a chemical or physical parameter of interest for planning irrigation;

- at least an actuator (20), provided with a remote transmission unit (21), configured to control at least one of the active components, pump or valve, of an irrigation system;

- a software loaded on suitable calculation means configured so that it exchanges data with a plurality of databases and in which is implemented the method for determining the optimal quantity of water to be provided to at least a plot according to any one of the preceding claims;

- a software (40) which allows to control said at least one actuator (20) so that the water quantities determined by means of the method according to any one of the preceding claims are supplied.

**5.** System for automatically managing irrigation according to claim 4, further comprising sensor for measuring at least one or more among the following ones: temperature, relative humidity, atmospheric pressure, solar radiation, wind direction and speed, quantity of accumulated rain.

**6.** System for automatically managing irrigation according to claims 4 or 5, **characterized in that** said at least one sensor (20) detects one or more among the following quantities relating to the soil: apparent dielectric permittivity, water volume content, temperature, electric conductivity.

**Patentansprüche**

**1.** Verfahren zur Bestimmung der optimalen Wassermenge, die einem kultivierten Grundstück zur Verfügung gestellt wird, folgende Schritte umfassend:

b) Beschaffung von Informationen über Bodenmerkmale (TAW, RAW), wobei die besagte Information über Bodenmerkmale Informationen über die insgesamt verfügbare Wassermenge im Wurzelbereich (TAW), und Informationen über die sofort für die Wurzeln verfügbare Wassermenge (RAW), enthält;
c) Beschaffung von Informationen über die Art der Kultur, einschließlich ihres Entwicklungsstadiums (Kc) und des Grades an Wasserbelastung, der sie gemäß der Entwicklungsstadium (MAD) ausgesetzt sein kann;
d) Beschaffung von Informationen über die vorgesehenen Wetterbedingungen einschließlich der vorgesehenen Regenmenge ($P_{i1}$);
e) Berechnung eines Parameters, der das Niveau der Wasserbelastung im Boden zum gegenwärtigen Zeitpunkt ($Ks_{i-1}$) anzeigt;
f) Berechnung, gemäß dem besagten Parameter ($Ks_{i-1}$), der am Punkt
e) berechnet wurde, und der Information über den Kulturentwicklungsstadium (Kc), das bei Punkten c) und d) erhalten wurde, eines Parameters, der die durch den Boden durch Verdunstung und Transpiration ($ETc_i$) verloren gegangene Wassermenge, anzeigt;

**dadurch gekennzeichnet, dass**
das Verfahren vor dem Schritt b) folgenden Schritt weiter umfasst:

a) Beschaffung von Informationen über den Bodenwassergehalt zum gegenwärtigen Zeitpunkt ($D_{i-1}$);

wobei
der besagte Parameter, der das Niveau der Wasserbelastung im Boden zum aktuellen Zeitpunkt ($Ks_{i-1}$)anzeigt, gemäß der besagten Information über den Bodenwassergehalt zum aktuellen Zeitpunkt ($D_{i-1}$) und gemäß der besagten Information über Bodenmerkmale, (TAW, RAW), berechnet wird,
und dass das Verfahren weiterhin folgende Schritte umfasst:

g) Berechnung, gemäß dem besagten Parameter (ETci), der bei Punkt f) berechnet wird, eines Parameters, der die Wasserbelastung im Boden zu einem Zeitpunkt, der auf den aktuellen ($KS_i$) folgt, in der Hypothese von keiner Bewässerung, anzeigt;
g1) Berechnung einer Wasserbilanz des Bodens, wobei der Bodenwasserverbrauch zu dem Zeitpunkt, der dem aktuellen ($D_i$) folgt, als eine Funktion des besagten Bodenwassergehaltes zum gegenwärtigen Zeitpunkt ($D_{i-1}$) der besagten Menge von vorhergesehener Regen ($P_{-1}$), der zur gegenwärtigen Zeit ($IRR_{i-1}$) bereitzustellenden Wassermenge und der besagten durch Verdunstung und Transpiration (ETci) im Boden verlorene gegangenen Wassermenge, berechnet wird,
h) Bestimmung der Wassermenge, die zum gegenwärtigen Zeitpunkt ($IRR_{i-1}$) bereitzustellen ist, mittels der Wasserbilanz des Bodens, die unter Punkt g1) derart berechnet wurde, dass der Wert des besagten Bodenwasserverbrauchs ($D_i$) einen solchen Wert aufweist, dass der besagte Parameter ($Ks_i$), der am Punkt g) berechnet wurde, höher oder gleich dem besagten Wasserbelastungsniveau ist, dem die Kultur gemäß ihrer Entwicklungsstufe (MAD) ausgesetzt werden kann.

**2.** Verfahren nach Anspruch 1, **dadurch gekennzeichnet, dass** die besagten Informationen über die in dem Zeitintervall vorgesehenen Wetterbedingungen Informationen über eine oder mehrere der folgenden Variablen umfassen: Temperatur, Sonnenstrahlung, Windgeschwindigkeit.

**3.** Verfahren zum Bestimmen einer Bewässerungsstrategie für eine Vielzahl von Kulturen, die auf einer Vielzahl von landwirtschaftlichen Grundstücken in Abhängigkeit von mindestens einer gemeinsamen Bewässerungsquelle vorgesehen sind, wobei die besagte Bewässerungsquelle in der Lage ist, jedem Zeitintervall eine Wassermenge zu liefern, die niedriger oder gleich einem festen Maximum ist, aus folgenden Schritten bestehend:

k) Bestimmung, mittels des Verfahrens nach Anspruch 1 oder 2 , der Wassermenge, die zum gegenwärtigen Zeitpunkt (IRRi) für jede der besagten Pflanzen bereitzustellen ist,

l) Überprüfung, ob die Summe der für alle Grundstücke bestimmten Wassermengen niedriger ist als das besagte festgesetzte Maximum, und falls dies nicht der Fall ist, Verringerung der Wassermenge, die der Kultur mit der größten Wasserbelastung zugeführt wird, bis zur Erfüllung der damit verbundenen Beschränkung auf die Verfügbarkeit von Wasser.

4. System zur automatischen Verwaltung der Bewässerung, umfassend:

- mindestens einen Sensor (10), der mit einer Fernübermittlungseinheit (11) versehen ist, die in dem Feld positioniert und konfiguriert ist, um mindestens einen chemischen oder physikalischen Parameter von Interesse zum Planen der Bewässerung, zu erfassen;

- mindestens einen Aktuator (20), der mit einer Fernübermittlungseinheit (21) versehen ist, die konfiguriert ist, um mindestens eine der aktiven Komponenten, Pumpe oder Ventil, eines Bewässerungssystems zu steuern;

- eine auf geeignete Berechnungsmittel geladene Software, die so konfiguriert ist, dass sie Daten mit einer Vielzahl von Datenbanken austauscht, und in der das Verfahren zum Bestimmen der optimalen Wassermenge implementiert ist, die mindestens einem Diagramm nach einem der vorhergehenden Ansprüche bereitzustellen ist;

- eine Software (40), die es erlaubt, das mindestens ein Stellglied (20) derart zu steuern, dass die mittels des Verfahrens nach einem der vorhergehenden Ansprüche bestimmten Wassermengen gespeist werden.

5. System zur automatischen Bewässerungsbewältigung nach Anspruch 4, das ferner einen Sensor zum Messen von mindestens einem oder mehreren der folgenden Parameter aufweist: Temperatur, relative Feuchtigkeit, atmosphärischer Druck, Sonnenstrahlung, Windrichtung und -geschwindigkeit, Menge angesammelten Regens.

6. System zur automatischen Bewässerungsbewältigung nach Anspruch 4 oder 5, **dadurch gekennzeichnet, dass** der mindestens eine Sensor (20) eine oder mehrere der folgenden bodenbezogenen Größen erfasst: scheinbare dielektrische Permissivität, Wasservolumenanteil, Temperatur, elektrische Leitfähigkeit.

## Revendications

1. Procédé de détermination de la quantité optimale d'eau à fournir à une parcelle en culture, comprenant les étapes suivantes:

b) acquisition d'informations sur les caractéristiques du sol (TAW, RAW), lesdites informations sur les caractéristiques du sol comprenant des informations sur la quantité d'eau disponible dans son ensemble dans la zone des racines (TAW) et des informations sur la quantité d'eau immédiatement disponible pour les racines (RAW) ;

c) acquisition des informations sur le type de culture, y compris son stade de développement (Kc) et le niveau de stress hydrique qu'elle peut subir en fonction du stade de développement (MAD);

d) acquisition des informations sur les conditions météorologiques prévues, y comprise la quantité de pluie prévue ($P_{i-1}$) ;

e) calcule d'un paramètre indiquant le niveau de stress hydrique dans le sol à l'instant actuel ($Ks_{i-1}$) ;

f) calcul, en fonction dudit paramètre ($Ks_{i-1}$) calculé au point e) et desdites informations sur le étape de développement de la culture (Kc) acquis aux points c) et d), d'un paramètre indiquant la quantité d'eau perdue par le sol dûe à l'évaporation et à la transpiration ($ETc_i$ ;

**caractérisé en ce que**
le procédé comprend en outre, avant l'étape b), l'étape suivante:

a) acquisition des informations sur la teneur en eau du sol à l'heure actuelle ($D_{i-1}$) ;

et **en ce que**

ledit paramètre indiquant le niveau de stress hydrique dans le sol à l'heure actuelle ($Ks_{i-1}$) est calculé en fonction desdites informations sur la teneur en eau du sol à l'instant courant ($D_{i-1}$) et selon lesdites informations sur les caractéristiques du sol (TAW, RAW).

et **en ce que** le procédé comprend en outre les étapes suivantes:

g) calcule, en fonction dudit paramètre (ETci) calculé au point f), d'un paramètre indiquant le stress hydrique dans le sol à un pas de temps suivant le courant ($Ks_i$), dans l'hypothèse d'une absence d'irrigation;

g1) calcule d'un bilan hydrique du sol, où l'appauvrissement en eau du sol au pas de temps suivant le courant ($D_i$) est calculé en fonction de ladite teneur en eau du sol à l'instant courant ($D_{i-1}$), de ladite quantité de pluie prévue ($P_{i-1}$), de la quantité d'eau à fournir à l'heure actuelle ($IRR_{i-1}$) et de ladite quantité d'eau perdue par le sol dû à l'évaporation et la transpiration (ETci)

h) détermination, au moyen dudit bilan hydrique du sol calculé au point g1), de la quantité d'eau à fournir à l'instant courant ($IRR_{i-1}$) de sorte que la valeur dudit appauvrissement de l'eau du sol ($D_i$) a une valeur telle que ledit paramètre ($Ks_i$) calculé au point g) soit supérieur ou égal au dit niveau de stress hydrique que la culture est susceptible de subir en fonction de son stade de développement (MAD).

2. Procédé selon la revendication 1, **caractérisé en ce que** lesdites informations sur les conditions météorologiques prévues dans ledit intervalle de temps comprennent des informations sur une ou plusieurs parmi les variables suivantes: température, rayonnement solaire, vitesse du vent.

3. Procédé de détermination d'une stratégie d'irrigation pour plusieurs cultures prévues sur plusieurs parcelles agricoles en fonction d'au moins une source d'irrigation partagée, ladite source d'irrigation pouvant fournir à chaque intervalle de temps une quantité d'eau inférieure ou égale à un maximum fixé comprenant les étapes suivantes:

k) détermination, au moyen du procédé selon les revendications 1 ou 2, de la quantité d'eau à fournir à l'heure actuelle (IRRi) pour chacune desdites cultures

l) vérification si la somme des quantités d'eau déterminées pour toutes les parcelles est inférieure audit maximum fixé et, dans le cas contraire, réduction de la quantité d'eau fournie à la culture susceptible de subir le plus grand stress hydrique, jusqu'à satisfaire la contrainte liée à la disponibilité de l'eau.

4. Système de gestion automatique d'irrigation comprenant:

- au moins un capteur (10) muni d'une unité de transmission à distance (11), positionné sur le terrain et configuré pour détecter au moins un paramètre chimique ou physique d'intérêt pour planifier l'irrigation;

- au moins un actionneur (20), muni d'une unité de transmission à distance (21), configuré pour commander au moins l'un des composants actifs, pompe ou soupape, d'un système d'irrigation;

- un logiciel chargé sur des moyens de calcul adaptés configuré pour échanger des données avec une pluralité de bases de données et dans lequel est mis en oeuvre le procédé de détermination de la quantité d'eau optimale à fournir à au moins une parcelle selon l'une quelconque des revendications précédentes;

- un logiciel (40) qui permet de commander ledit au moins un actionneur (20) de sorte que les quantités d'eau déterminées au moyen du procédé selon l'une quelconque des revendications précédentes sont fournies.

5. Système de gestion automatique d'irrigation selon la revendication 4, comprenant en outre un capteur pour mesurer au moins un parmi les suivants: température, humidité relative, pression atmosphérique, rayonnement solaire, direction et vitesse du vent, quantité de pluie accumulée.

6. Système de gestion automatique d'irrigation selon la revendication 4 ou 5, **caractérisé en ce que** ledit au moins un capteur (20) détecte une ou plusieurs des quantités suivantes relatives au sol: permittivité diélectrique apparente, teneur en eau, température, conductivité électrique.

Fig. 1

Fig. 2

Fig. 3

Fig. 4

Fig. 5

**EP 3 179 319 B1**

**Patent documents cited in the description**

- US 20030179102 A
- US 8924031 B